# EUROPEAN PATENT SPECIFICATION

(11) **EP 2 104 587 B1**
(45) Date of publication and mention of the grant of the patent: **30.03.2011**
(21) Application number: 08701755.4
(22) Date of filing: 07.01.2008
(51) Int. Cl.: B23K 26/14, B23K 26/38, B23K 26/40

(54) **A PROCESS FOR LASER CUTTING A NON-METALLIC MATERIAL**
VERFAHREN ZUM LASERSCHNEIDEN EINES NICHTMETALLISCHEN MATERIALS
PROCÉDÉ DE DÉCOUPAGE AU LASER D'UN MATÉRIAU NON MÉTALLIQUE

(30) Priority: 08.01.2007 GB 0700271; 05.03.2007 GB 0704216; 23.11.2007 GB 0723029
(43) Date of publication of application: 30.09.2009
(73) Proprietor: SPI Lasers UK Limited, 3 Wellington Park Tollbar Way Hedge End Southampton SO30 2QU (GB)
(72) Inventor: HOULT, Anthony, Paul, Campbell, CA 95008 (US); GABZDYL, Jacek, Tadeusz, Hampshire SO42 7WF (GB); VARNHAM, Malcolm, Paul, Hampshire SO24 9HF (GB)
(74) Representative: Jones, Graham Henry
(86) International application number: PCT/GB2008/000039
(87) International publication number: WO 2008/084206

(56) References cited:
- EP-A- 1 430 987
- WO-A-2007/024511
- US-A1- 2005 136 622

## Description

This invention relates to a process for laser cutting a non-metallic material.

Semiconductor devices fabricated on a semiconductor wafer are conventionally usually separated from each using diamond saws. In order to prevent cracks from forming, the speed of the sawing process is usually limited to less than 1 m/min. Higher sawing speeds would be desirable for reducing costs.

Solar cells made from polysilicon are also conventionally separated by saws. The polysilicon substrates are very thin, and the speed of the sawing process is limited to prevent chipping.

U.S. Pat. No. 4,224,101 to Tijburg et al. describes a process for separating semiconductor devices grown on a wafer in which a laser beam is used to scribe the wafer by cutting grooves into its surface. The scribing process results in contamination from polycrystalline silicon which adheres to the surface of the wafer. Tijburg et al describe how this contamination can be removed by subsequent acid etching prior to completion of the separation process by braking along the scribed grooves.

U.S. Pat. No. 4,545,464 to Takeuchi discloses that laser scribing can result in microcracks being formed, particularly in silicon on sapphire wafers in which the microcracks are formed when the laser is traversed in particular directions. Takeuchi avoids such microcracks by laser scribing in directions in which micro-cracks do not form.

U.S. Pat. No. 5,916,4.60 to Imoto and Sato reviews micro-cracking problems that occur with CO₂ laser beams when dicing semiconductor devices on glass and ceramic substrates. The apparatus they describe contains a guide and a gas intake. The gas surrounds the laser beam as it is focused on the surface of the semiconductor, and the gas is used to blow off debris emitted during the cutting process. When the laser power is set too high, the substrate dices owing to an evaporation phenomenon. Many cracks are generated on the surface, back side, and diced planes due to thermal deformation, and "dross" is deposited on the back side. In contrast, when the power is set low, evaporation does not occur. At intermediate powers, the dicing occurs owing to a breaking phenomenon. Although this avoids "dross" arising from the evaporation effect, microcracks are still formed on the surface, backside, and diced planes. Their solution is to focus the continuous wave CO₂ beam above the surface of the substrates, and to carefully adjust the speed that the laser beam is traversed across the surface of the substrate, the gas flow, and the laser power such that a crack propagates in the desired direction. The assist gas may include nitrogen, argon, air or oxygen, or a mixture of such gases. Gas pressures in the range 0.5kg/cm² to 10kg/cm² are disclosed. Examples of alumina substrates, alkali-free glass substrates and borosilicate glass substrates are disclosed.

U.S. Pat. No. 6,376,797 to Piwczyk discloses a method of cutting semiconductors using a short pulse laser (having a pulse width in the range of tens of nanoseconds or less) in a vacuum or in a gaseous environment consisting substantially of one or more of the following gases: forming gas (such as hydrogen) and noble gases. Piwczyk demonstrates increased penetration rates and cutting speeds. He teaches that when using a laser to cut silicon or any other material in air, the laser must be operated so as to provide a peak power density at the beam focus that is less than that which will cause the air to break down and form a plasma. This is because the formation of a plasma consumes substantially all or most of the laser energy, thereby preventing laser cutting since little of the energy reaches the material to be cut. He also notes that a plasma is always formed under his experimental conditions. He postulates that this may be because of a delayed onset of plasma in vacuum and inert gases when compared to other ambients. Such an explanation would be consistent with plasma propagation studies as reported by C.V. Bindhu et al in the Journal of Applied Physics, Volume 94, Number 12 on pages 7402 to 7407. Bindhu et al show that it takes several tens of nanoseconds for a laser initiated argon spark to form at 1 atmosphere. Piwczyk also notes that volatilized silicon appears to lead to plasma formation as seen by a bright blue flash near the material surface.

A problem with the above approaches is that throughput in a production process is relatively slow, and thus semiconductor device manufacturers have been resistant to move away from using diamond saws to cut silicon wafers.

An aim of the present invention is to provide a process for laser cutting a non-metallic material which reduces the above aforementioned problem. According to the invention, the process of claim 1 is provided

By a "non-metallic material", it is meant a material that is not an electrically conductive metal. Electrically conductive metals are commonly cut using a plasma cutting process in which energy from an electrical power source is transferred through the plasma to the material being cut. The plasma is an electrically conductive gas that is struck by an electrical arc starting circuit that typically produces an alternating current voltage of 5,000 to 10,000V at 2MHz. Once the gas is ionized, the plasma is energized and maintained by an electrical power supply in the range 240 to 400V dc. In the process being described herein, the material being cut is not an electrically conductive metal, and it is believed that the plasma is being generated, energized, and maintained by the laser. Non-metallic materials as defined herein include metalloids such as the semiconductors silicon and germanium. Non-metallic materials also include materials such as semiconductor wafers that contain metallization tracks on their surface.

As will be seen below, the results obtainable with the invention are very surprising. The ultra smooth kerf together with the increased cutting speeds of greater than 8m/min is completely unexpected. These should be compared with approximately 1 to 3m/min by prior art methods, including diamond sawing and laser processing. A new processing regime has been discovered which it is believed will have important commercial implications for a wide range of industries. In addition, it is surprising that a CW laser operating at around 1µm can cut without inducing significant cracking and surface oxidation. Prior art systems use pulsed lasers or use frequency tripled or doubled lasers operating at approximately 355nm and 532nm, often with a multiple pass technique (applicable only to less than approximately 0.2mm thick silicon) in order to access the increased absorption of silicon at these wavelengths. Thus the inventive process can be seen to operate on a completely different mechanism and give dramatically improved performance.

Surprisingly, by adjusting the stand-off distance it was discovered that the non-metallic material can be machined at much higher process speeds than can be achieved using a conventional laser cutting process. More surprisingly, no thermal damage could be seen on either the top face or bottom face of the non-metallic material. Cutting speeds of around 3m/min were achieved with a wafer having a thickness of 0.68mm. The stand-off distance was approximately 50µm. Further optimization has increased the cutting speed to 6m/min for a 0.69mm thick wafer, and to 8.5m/min for thinner wafers, a cutting speed which is limited by the speed of the cutting table as opposed to the process itself

This is a surprising result because it had hitherto been believed that such high cutting speeds were impossible in silicon using continuous wave lasers having a wavelength in the near infra-red without inducing excessive thermal damage. This is because a silicon wafer only absorbs a small percentage of the laser radiation at wavelengths approximately 1 µm.

At least one of the intensity of the laser beam, the pressure of the gas in the gas stream, the stand off distance, and the focus position may be adjusted to cause the increase in the temperature of the plasma jet.

The temperature of the plasma jet may be greater than 2000C.

The focus position may be selected such that the plasma jet is contained substantially below the surface of the material. The focus position may be between approximately 100µm and 250µm below the surface of the material. The focus position may be between approximately 150µm and 200µm below the surface of the material. The focus position may be selected such that the average roughness is less than 2µm Ra. At least one of the focus position and the cutting speed may be adjusted to increase the cohesiveness of ejecta. The cutting speed may be adjusted such that ejecta emerge at an angle substantially equal to 30 degrees from the normal to the surface of the material. The focus position may be selected in order to define the kerf by substantially parallel side walls. The focus position may be selected in order to provide a cutting speed of at least 1 m/min. The focus position may be selected in order to provide a cutting speed of at least 5m/min. The focus position may be selected in order to provide a cutting speed of at least 8m/min.

The process may include the step of providing a focussing monitoring means.

The process may include the step of providing an ejecta monitoring means.

The gas may comprise an inert gas. The inert gas may comprise a noble gas. The noble gas may be argon.

The gas pressure may be greater than 100psi (689 Kpa) and less than 500psi (3447 KPa). The gas pressure may be between approximately 150psi (1034 KPa) and 300psi (2068 KPa).

The outlet orifice may have an exit diameter of between 100µm to 1mm. The exit diameter may be approximately 500µm.

The stand-off distance may be less than 250µm. The stand-off distance may be less than 200µm. The stand-off distance may be between approximately 50µm and 100µm.

The beam waist may have a diameter less than 20µm. The diameter may be less than 10µm. The diameter may be less than 7µm.

The optical intensity at the beam waist may be greater than 70MW/cm². The optical intensity may be greater than 200MW/cm². The optical intensity may be greater than 390MW/cm².

The laser may be defined by an M² between 1 and 4, where M² is the beam propagation factor as defined by ISO standard 11146. The M² may be less than 2. The M² may be less than 1.5. A perfect gaussian laser beam has an M² of 1, and the higher the M² of the laser beam, the larger the diameter of a focussed spot (the beam waist 41) for a given input beam divergence.

The wavelength of the laser radiation may be in the range 800nm to 2500nm. The range may be between 1030nm and 1150nm. The range may be 1060nm to 1090nm.

The laser may have an average power on the surface of the material greater than 20W. The average power may be greater than 37.5W. The average power may be between 100W and IkW. The average power may be between 100W and 500W.

The laser is a continuous wave laser.

The laser may be a fibre laser comprising at least one rare-earth dopant. The rare-earth dopant may comprise Ytterbium.

The material may have a surface flatness in a region to be machined of less than the stand-off distance. The surface flatness may be less than 10µm.

The material may comprise at least one of a semiconductor, a crystal, a glass, or a ceramic. By a "crystal" it is meant a crystal other than a semiconductor. The term "ceramic" as used herein is not meant to include a semiconductor or a crystal. Similarly, the term "crystal" as used herein is not meant to include a semiconductor. The semiconductor may be silicon. The ceramic may be alumina. The crystal may be sapphire.

The gas may comprise a reactive gas that can react with the material.

Embodiments of the invention will now be described solely by way of example and with reference to the accompanying drawings in which:
Figure 1 shows a laser cutting apparatus for cutting a non-metallic material according to the process of the present invention;
Figure 2 shows a laser cutting apparatus viewed at right angles to the cutting direction in order to show the exit angle of the ejecta 25;
Figure 3 shows a top view of a kerf cut in a material;
Figure 4 shows an apparatus for laser cutting a material in which the laser is focussed within the material;
Figure 5 shows a cross section of a kerf cut in a material;
Figures 6 and 7 show calculated results of the variation of beam diameter with the distance from the focus of the beam for laser beams having an M² = 1.1; and
Figures 7 and 8 show calculated results of the variation of beam diameter with the distance from the focus of the beam for laser beams having an M²= 1.5.

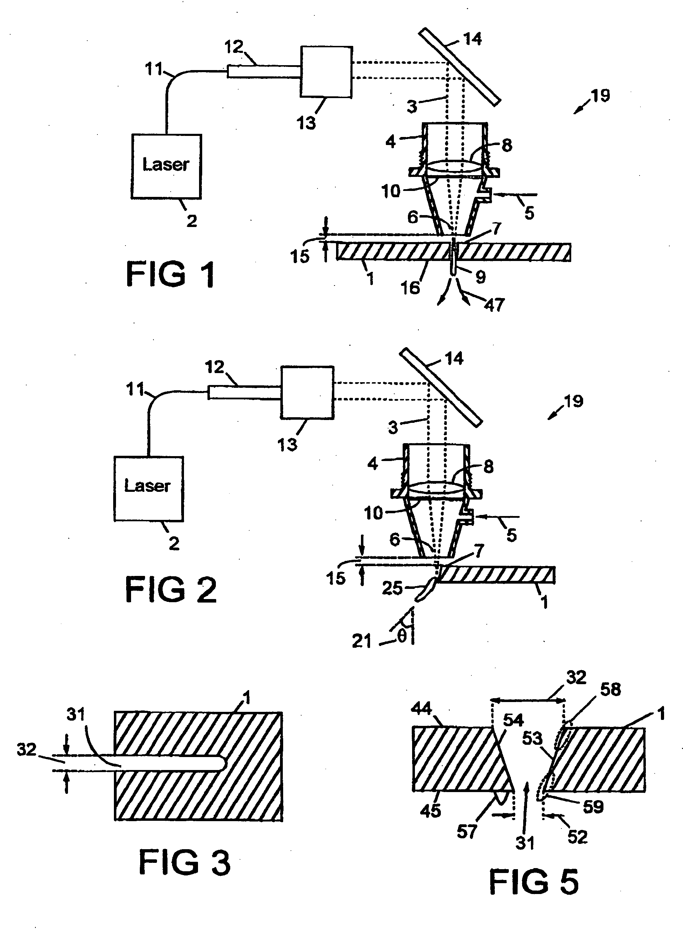

Referring to Figure 1, there is shown a laser cutting apparatus 19 for cutting a non-metallic material 1, the apparatus 19 comprising a laser 2, a gas nozzle 4 and an outlet orifice 6 contained in the gas nozzle 4. In operation, the outlet orifice 6 is positioned at a stand-off distance 15 from a surface 7 of the material 1. Gas 5 is flowed through the outlet orifice 6 to form a gas stream 47. The laser 2 is energised in order to create a laser beam 3. The laser beam 3 is focussed through the outlet orifice 6 to form a beam waist 41 at a focus position 48 at or near the surface 7 of the material 1.

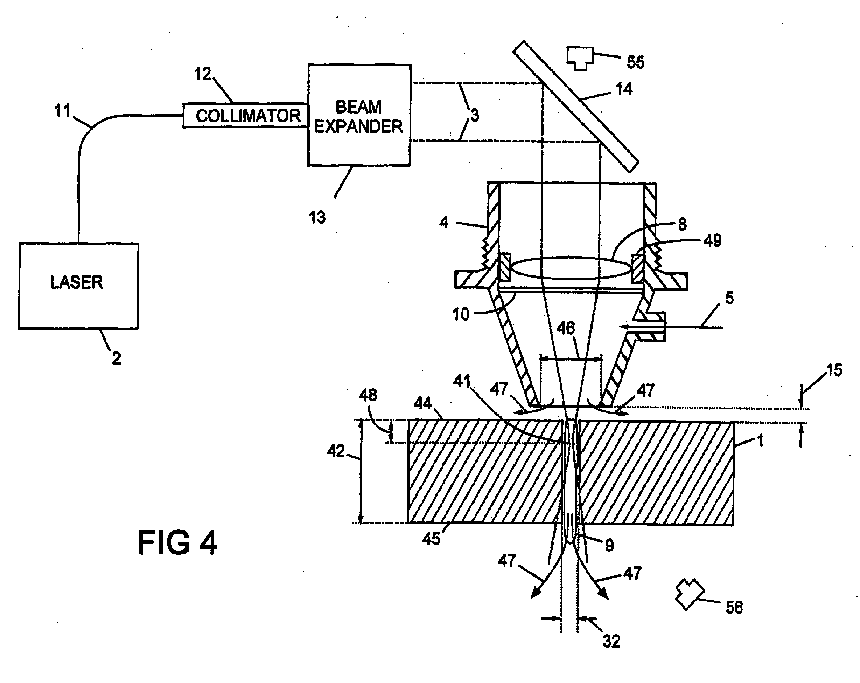

The laser 2 can be used to strike a plasma jet 9 in the gas stream 47. The laser 2 can then be used to heat the plasma jet 9 to cause the temperature of the plasma jet 9 to increase sufficiently to cut the material 1 to produce a kerf 31 that has an upper zone 58 having an average roughness less than 5µm Ra. The kerf 31 and the upper zone 58 are shown with reference to Figures 3 and 5 respectively, and the beam waist 41 and the focus position 48 is shown with reference to Figure 4.

By a "non-metallic material", it is meant a material that is not an electrically conductive metal. Electrically conductive metals are commonly cut using a plasma cutting process in which energy from an electrical power source is transferred through the plasma to the material being cut The plasma is an electrically conductive gas that is struck by an electrical arc starting circuit that typically produces an alternating current voltage of 5,000 to 10,000V at 2MHz. Once the gas is ionized, the plasma is energized and maintained by an electrical power supply in the range 240 to 400V dc. In the process being described herein, the material being cut is not an electrically conductive metal, and it is believed that the plasma 9 is being generated, energized, and maintained by the laser 2. Non-metallic materials as defined herein include metalloids such as the semiconductors silicon and germanium.

In a preferred embodiment, the laser 2 is a continuous-wave ytterbium-doped fibre laser manufactured by SPI Lasers UK Limited (model number SP200C-001) that emits between 10W and 200W of laser radiation at approximately 1090nm in a single mode. The laser 2 emits the laser beam 3 via an optical fibre cable 11 and a collimation optics 12. An optional beam expander 13 is provided to adjust the diameter of the beam waist 41, a larger diameter of the laser beam 3 providing a smaller diameter of the beam waist 41. Without the beam expander 13, the diameter of the laser beam 3 emitted from the collimation optics 12 is approximately 5.5mm. With a X2 beam expander, the diameter of the laser beam 3 is 11mm. The laser beam 3 is input into the gas nozzle 4 via a reflector 14. Focussing optics 8 is provided to focus the laser beam 3 through the gas nozzle 4 onto the surface 7 of the material 1. A cover slip 10 is provided to protect the focussing optics 8 from dust or debris.

In an initial experiment, the material 1 was a silicon wafer. A 50mm focal length lens was used as the focussing optics 8. The diameter of the beam waist 41 was calculated to be approximately 15µm to 20µm. The gas 5 was argon with a pressure of approximately 200psi (1379 KPa). The gas nozzle 4 was a commercially available gas nozzle having an effective exit diameter 46 (shown with reference to Figure 4) of 0.5mm. Without the material 1 being in place, the gas nozzle 4 emitted the gas 5 in a gas stream having a diameter of approximately 0.5mm.

Surprisingly, by adjusting the stand-off distance 15 it was discovered that silicon can be machined at much higher process speeds than can be achieved using a conventional laser cutting process. More surprisingly, no thermal damage could be seen on either the top face or bottom face of the silicon wafer. Cutting speeds of around 3m/min were achieved with a silicon wafer having a thickness of 0.68mm. The stand-off distance 15 was approximately 50µm. Further optimization has increased the cutting speed to 6m/min for a 0.68mm thick silicon wafer, and to 8.5m/min for thinner wafers, a cutting speed which is limited by the speed of the cutting table (not shown) as opposed to the process itself.

This is a surprising result because it had hitherto been believed that such high cutting speeds were impossible in silicon using continuous wave lasers having a wavelength in the near infra-red without inducing excessive thermal damage. This is because a silicon wafer only absorbs a small percentage of the laser radiation at wavelengths of approximately 1 µm.

Further experiments demonstrated that the above process also works with processed silicon wafers as used in the semiconductor industry. The results are believed to be commercially very significant for back-end processing wherein the processed wafers are diced up prior to wire bonding and packaging as integrated circuits.

Non-metallic materials other than silicon may be used so that, for example, the material 1 can be alumina or silicon nitride. Again this is surprising because these materials are conventionally cut using low power CO₂ lasers due to the improved absorption of this material at the long far infra-red 10.6µm wavelength of these lasers. Previous laboratory trials had shown that silicon, alumina and silicon nitride could be machined with near infra-red emitting fiber lasers but at the emission wavelength of these lasers, absorption of the beam by the material was inconsistent and cutting was therefore unpredictable. To achieve improved cutting, co-axially delivered oxygen assist gas was required and this led to excess heat input to the part and excessive melting of the material.

Referring now to Figure 2, there is shown the apparatus 19 of Figure 1 with the non-metallic material 1 being moved from right to lef, and molten material, the ejecta 25, being ejected from below the material 1. The ejecta 25 is shown exiting the material 1 at an angle θ 21 from the vertical. It will be shown with reference to the Examples that it is possible to improve process control by monitoring the angle θ 21.

Figure 3 shows a top surface of a kerf 31 that has been cut in the material 1. The kerf 31 has a kerf width 32. The kerf 31 can be a slot cut through the material 1, or can be a groove cut into the material 1. Figure 5 shows a cross-section of the kerf 31. The kerf 31 has a kerf width 32 on its top surface 44 and a kerf width 52 on its bottom surface 45. The width 32 is generally different from the width 52.
Surprisingly, it was found possible to optimize the cutting process such that the side walls 53, 54 were substantially parallel. The side walls 53, 54 have an upper zone 58 and a lower zone 59. The process being described here produces surprisingly smooth surfaces in the upper zone 58. Also shown is dross 57 adhered to the bottom surface 45. Dross 57 is very undesirable and can cause cracking of the material 1.

Figure 4 shows a more detailed view of the apparatus of Figure 1 with the inclusion of focussing means 49, focus monitoring means 55 and ejecta monitoring means 56. For convenience, the kerf 31 is shown as having a constant width 32. The focussing means 49 allows the location of the beam waist 41 to be varied independently of the stand-off distance 15. The location of the beam waist 41 is shown to be at a focus position 48 measured with respect to a top surface 44 of the material 1. A negative value for the focus position 48 would indicate that the beam waist 41 is above the surface 44, whilst a positive value would indicate tha the beam waist 41 is below the surface 44. The focussing means 49 can be a mechanical adjuster such as a focussing ring. The focus monitoring means 55 allows the position of the beam waist 41 to be referenced to the top surface 44 of the material 1. This can be achieved prior to initiating the cutting process by focussing onto the top surface 44 in order to establish a reference datum. When proper focussing is achieved, laser radiation will be reflected, and the reflected radiation can be observed with the focus monitoring means 55 by means of a partially reflecting mirror. The partially reflecting mirror can be the reflector 44 which can be partially transmissive. The focus monitoring means 55 can be a video camera. Alternatively, the focus monitoring means 55 can be an infra read detector card. Once the reference datum is known, the focus can be adjusted to the desired focus position 48 with the focussing means 49. The ejecta monitoring means 56 may be a video camera, or an observation port for viewing of the process. The ejecta monitoring means 56 may monitor the angle θ 21 emitted by the ejecta 25. Alternatively or additionally, the ejecta monitoring means 56 may monitor the consistency of the plasma jet 9. Information obtained from the ejecta monitoring means 56 may be used to control the cutting speed, gas pressure, or the power emitted by the laser 2.

Figure 5 shows the cross-section of a typical kerf 31. The kerf 31 has a width 51 on its top surface 44 and a width 52 on its bottom surface 45. The width 51 is generally different from the width 52. Surprisingly, it was found possible to optimize the cutting process such that the side walls 53, 54 were substantially parallel, whereupon the kerf widths 51 and 52 were substantially equal.

The effect of a number of key process variables using the types of apparatus shown in Figures 1, 2 and 5 was studied through a series of single variable experimental trials. Kerfs were cut in materials using a fixed number of multiple laser pulses and laser power fixed at 200W. Process variables studied were nozzle-to-workpiece stand-off distance 15, the type of gas 5, and gas pressure. It became clear as these trials progressed that inert co-axial assist gas and reduced nozzle stand-off distance 15 were key variables in producing an increased percentage of fully penetrating slots. Further fine tuning of the key parameter of nozzle stand off distance 15 using argon assist gas at high pressure, 200psi (1379 KPa), led to the nozzle to workpiece distance 15 being reduced further to below 50 microns and at this point 100% of the cuts were fully penetrated. Inconsistent coupling and poor kerf quality was observed at gas pressures below 175 psi (1206 KPa). Not only did the process appear visually very different from prior art cutting processes, but no debris was noted on the upper or lower surfaces 44, 45 of the laser cut material 1.

The stand-off distance 15 is significantly smaller than usually employed. In prior art laser cutting, 200 microns and above is used for micro metal cutting due to non-flat metal surfaces and subsequent blocking problems. In the present case, the very flat surface permitted much shorter distances to be maintained. Hence two very significant changes have been made, the use of shorter nozzle-to-workpiece stand-off distance 15 and an inert assist gas were used. It was also noted that much cleaner kerfs were produced with less recast layer material being adhered to the substrate.

It is well known that the absorption of silicon at a wavelength of 1090nm is low and hence 1 micron lasers are not considered ideal for cutting silicon. However, surprisingly, at 200 W continuous wave (cw) laser power, it soon became clear that there were very significant advantages to using fiber lasers for this process: it had previously been impossible to cut through a full thickness silicon wafer material without causing severe thermal damage. Not only has it now become possible to cut a much greater thickness of silicon than has previously been possible with this average power, but much higher cut speeds are possible, over 8 m/min was achieved with 200W CW. In addition, cutting of thinner polycrystalline silicon can be cut at very high speed and can also be cut at greatly reduced average power.

Further experimentation showed that only 50 W CW was required to cut 0.4 mm thick silicon. Further reduction in average power led to a clearly identified threshold at 37.5 W; laser cutting became intermittent at this power level and the cutting stopped.

It is currently believed that the material is being cut by a plasma jet 9 that is formed in the gas stream 47. The gas stream 47 is believed to be at or within a factor of 2 from supersonic velocities. This is consistent with our observation that at the higher pressures, the gas nozzle 4 is choked, that is, increasing the gas pressure has little effect upon the gas flow or cutting speeds. The gas stream 47 will therefore propagate the plasma 9 through the kerf 31 at or within a factor of 2 from supersonic velocities. Initiation of the plasma jet 9 may occur by the light intensity within the beam waist 41 of the focused laser beam 3. Alternatively or additionally, initiation of the plasma jet 9 may be assisted by volatilized particles of the material 1, as taught by U.S. Pat. No. 6,376,797 to Piwczyk. Once initiated (or struck), the light intensity and the gas pressure may be sufficient for the plasma to propagate backwards along the laser beam 3. Because the laser beam 3 is a cw laser beam (unlike the short pulse laser disclosed by Piwczyk), the laser beam 3 energizes the plasma until it has sufficient energy to cut the material 9. Thus surprisingly, a new regime for laser cutting is formed, one that uses the laser 2 to strike (or generate) the plasma jet 9, and utilizes the laser 2 to energize the plasma jet 9 such that it can cut the material. These observations are supported by the propagation studies of Bindhu et al (referred to previously herein) which show that plasmas survive for at least 400ns at atmospheric pressure. It is believed that the plasma would survive much longer at the pressures being utilized in this invention. These observations are also supported by our observation that the cutting process is critically dependent upon the gas pressure, and the stand-off distance 15 between the nozzle 4 and the material 1 being cut.
Increasing the stand-off distance 15 will reduce the pressure of the gas 5 in the kerf 31, thus reducing the ability of a high-energy plasma jet 9 to form.

Consistent with the teachings of U.S. Pat. No. 6,376,797 to Piwczyk, the plasma jet 9 will severely attenuate the laser beam 3, and thus most of the power within the laser beam 3 will be absorbed by the plasma jet 9 and will not reach the material 1 as laser radiation.

It is believed that further enhancement of the process may be achieved by introducing hydrogen, or other forming, reducing, or reactive gases (such as halides) into or around the gas stream as taught in U.S. Pat. No. 6,376,797 to Piwczyk, U.S. Pat. Application No. US 2006/0249480 to Boyle et al, and U.S. Pat. No. 5,653,896 to Couch et al., which patents and patent application are incorporated by reference herein.

Experimentation on silicon wafers has shown the following points:
1) Populated wafers, that is wafers with many different layers of coatings can be cut at identical speeds.
2) Wafers with highly polished and unpolished surfaces can also be laser cut at identical speeds.
3) No re-deposition of debris was noted on the top surface 44.
4) No large particulate ejecta 25 were noted during the cutting process.
5) No re-deposited debris was noted on the bottom surface 45.
6) There appeared to be minimal recast on the top surface 44.

Points 5 and 6 combined with the high laser cutting speeds and consequent low heat input per unit length, suggest that thermal cracking of the silicon may be low. This needs to be confirmed by further analysis.

Reference will now be made to a number of Examples to further exemplify preferred embodiments of the invention. The Examples are provided for illustrative purposes only and should not be construed as limiting the invention in any way.

In the following Examples, the laser 2 used was a 200W water cooled continuous wave fibre laser manufactured by SPI Lasers UK Limited, model number SP200C-001. The laser beam 3 was able to be modulated. The laser nozzle 4 comprised a commercially available laser machining head procured from Laser Mechanisms Finekerf™ onto which a 0.5mm gas nozzle was fitted. The focussing optics 8 comprised a 50mm Optosigma triplet lens. X2, X2.8 and X3.7 commercially available beam expanders 13 were used to adjust the diameter of the beam waist 41. The process gas 5 was argon. A conventional industrial motion system (not shown in the drawings) was used to move the material 1 with respect to the laser beam 3.

Four thicknesses of mono-crystalline silicon wafers were used, 0.2, 0.4, 0.5 and 0.68 mm thick. A range of gas pressures from 50-300psi (344-2068 KPa) were used. Average powers from 100-200W continuous wave were used. 20mm long straight line cuts were made spaced 3 or 5 mm apart on the wafers. These were cut by piercing the silicon wafer with the laser 2 with a 30 to 40µsec pierce delay, prior to accelerating the motion table onto which the silicon wafer was attached. It would also be possible to cut from the edge of the wafers. The cut speed was changed from 100mm/min to a maximum of 8500 mm/min when possible. The speed was changed in appropriate increments to find the maximum cut speed at which the kerf 31 was fully penetrating the material 1. Observation of the molten material issuing from the underneath of the kerf 31, the ejecta 25, show clearly when the cut speed is approaching maximum.

Cracking on the underside of the kerf 31 is considered to be the most serious hurdle to overcome. Observations of cracked surfaces has shown that cracking is related to the amount of dross 57 adhered to the underside of the kerf 31. Cut quality was therefore assessed by observing the surface roughness, the parallelness of the kerf 31, and the amount of dross 57 adhered to the underside of the kerf 31. In an optimized apparatus, it would be possible to insert plasma monitor means 56 for watching for the dross 57 and for providing a signal to provide control signals for optimising the cutting speed and cut quality.

### EXAMPLE 1

Initial trials using X2 beam expansion, 200 psi (1379 KPa) argon, 200W cw, and the 0.68 mm thick silicon material were aimed at establishing the maximum effective cut speed. This was found to be 5200mm/min as this gave the best combination of speed and quality. Increasing the speed further reduces quality in that dross 57 was found to adhere to the bottom surface 45. The best cut quality was achieved at a maximum effective cut speed approximately 10% to 20% less than the maximum cutting speed at which kerfs with full penetration through the silicon could be achieved.

Trials were then performed at 150W where the maximum effective cut speed was found to be 2800 mm/min. At 100W, no penetration was possible on this thickness of material.

### EXAMPLE 2

The above trials were repeated at 200W using 300, 100 & 50 psi (2068, 689 and 344 KPa) argon.

At 300psi (2068 KPa), there was no cut speed improvement and no noticeable improvement in cut quality. At 100 psi (689 KPa), the maximum effective cut speed decreased to 3600 mm/min. At 50 psi (344 KPa) cuts were still possible at 2800 mm/min but all cuts were of considerably poorer quality. A confirmation trial was then performed at 150W and 200W at 300psi (2068 KPa) pressure and the same maximum effective cut speeds were confirmed as with 200psi (1379 KPa).

### EXAMPLE 3

With the Laser Mechanisms Finekerf™ laser machining head, it is possible to vary the nozzle to workpiece stand-off distance 15 and focus position 48 independently. So a series of trials were conducted where the nozzle to workpiece stand-off distance 15 was varied from 25um, which is as close as practically possible to the surface of the silicon, to 200um above the surface. No decrease in cut speed or quality was noted until nozzle to workpiece stand-off distance 15 was adjusted to 0.2 mm. At this point, the maximum effective cut speed decreased significantly to 4000mm/min at 200W and 2000 mm/min at 150W. Cut quality degraded rapidly when increasing cutting speed beyond this value as evidenced by an increase in the amount of dross 57 and an increase in surface roughness.

Whilst changing the focus position 48 to compensate for the nozzle to workpiece stand-off distance 15 change, a very significant effect of focus position 48 on cut quality was noted.

### EXAMPLE 4

The nozzle to workpiece stand-off distance 15 was fixed at 100µm, and a series of trials in which focus position 48 was changed in increments of 25µm independently of the nozzle to workpiece stand-off distance 15. As the focus position 48 was lowered into the material 1, a very significant change was noted in the cut quality. It was found that a focus position 48 of 150-200µm into the 0.68 mm thick material gave very much improved cut quality, although this varied with cut speed and power.

A technique was therefore developed and employed from this point on. This technique involved a careful observation of the ejecta 25 from the underneath of the cut. When the angle of the ejecta 25 stream changes from nearly normal to the sample to 30 degrees to the sample, the optimum cut speed (in terms of cut quality) is being approached. An additional indicator was then used. A loose intermittent spattery ejecta 25 indicated that focus position 48 was not deep enough into the material 1. An anti-clockwise motion of the adjustment ring on the Laser Mechanisms Finekerf™ laser machining head lowered the focus into the silicon and produced a change in the nature of the ejecta 25 stream, to a more cohesive more intense white coloured stream. A further lowering of the focus position 48 gave a very much more finely divided stream of ejecta 25. Analysis of the results showed that the cohesive stream ejecta 25 gave far better results consistently. The ejecta 25 stream can be monitored using the ejecta monitoring means 56 of Figure 4.

Adjusting the focus position 48 to provide the most cohesive ejecta stream 47 after each change of speed allowed the maximum effective cut speed to be found. Clean removal of the molten silicon ws achieved Using this technique (hereafter referred to as "**Process A**") a maximum effective cut speed of 6000mm/min was achieved on the 0.68 mm thick material using 200W and a maximum effective cut speed of 3400 mm/min was achieved using 150W on the same thickness.

Although more study is required, it appears that the optimum focus position 48 for cutting approximately 0.68µm thick silicon wafers with the best combination of speed and quality is between 25 & 50% of the material thickness depending on the speed and power being employed.

Given the importance of achieving the correct focus position 48, a focusing monitoring means 55 could have advantageously been added to the apparatus as described with reference to Figure 4.

### EXAMPLE 5

X1 (no beam expansion), X2.8 and X3.7 beam expanders were then employed using 200W, 200psi (1379 KPa) argon and the thicker 0.68 mm material only. The focus position 48 was optimized using Process A (referred to in Example 4) and was found to be approximately 175µm for each cause. Note that the exact focus position 48 was difficult to determine. It is believed to be 175µm, though may have been in the range from approximately 125µm to 225µm (after allowing for experimental error). Although the X2.8 & X3.7 beam expansion gave only slightly reduced maximum effective cut speeds, the extreme sensitivity of this process to the adjustment of the focus position 48 with the fixed nozzle stand off 15 of 100µm meant that higher beam expansions were difficult to use effectively.

No beam expansion (the X1 case) gave very interesting results. The cut speed was not greatly decreased. However, the cutting mechanism clearly changed significantly as evidenced by the different nature of the ejecta 25 stream. It was not possible by adjusting the focus position 48 to identify the 'cohesive ejecta 25 stream' that gave optimum results. This key observation was confirmed by examination of the upper edges of the cut surface (the upper zone 58) when using the X2 beam expander. Analysis of the cut surfaces has confirmed that using the X2 beam expander produces an upper zone 58 with very smooth, crack free upper edges, and with average roughness less than 2µm Ra, and often below 1µm Ra. In the XI case, however, the upper zone 58 was scalloped, and the cut process was clearly 'striation dominated'. Cracks of up to 20µm in length were also clearly present, and the average roughness was much greater than 5µm Ra..

### EXAMPLE 6

Different material thicknesses were then evaluated with the above focus optimization method (Process A). The maximum effective cutting speeds were:
1mm: 350mm/min, 200W
0.68mm, 6000mm/min, 200W
0.5 mm, 7000mm/min, 200W
0.4 mm, 8500 mm/min (max table speed) at 150W, 1000mm/min at 50W cw.
0.2 mm, 8500 mm/min at 100W
0.1 mm 8500 mm/min at 75W

These data were obtained using the X2 beam expander. The motion system (not shown) limited cutting speeds for thicknesses below 0.5 mm thick; faster speeds should be possible with faster motion systems.

### EXAMPLE 7

The argon assist gas 5 was then replaced with nitrogen. The quality of the process was found to be similar to that produced when no beam expansion is used The cut surface reverted to a heavily oxidized (blued) cracked surface without any of the smooth features attainable by the present invention. It is believed that this may have been because higher energy densities are required to strike and maintain a plasma in nitrogen as compared with argon.

### EXAMPLE 8

With 20W optical power, the X2 beam expander, and using argon as the assist gas 5, it was found possible to cut grooves into the surface of a silicon wafer. The stand-off distance 15 was 125µm, the gas pressure was 50psi (344 KPa), and the focus position 48 was approximately 50µm beneath the top surface 44. The groove was 110µm wide, very clean, with almost no melt build up on the upper zone 58, possibly 2 - 3µm maximum, and the average roughness was less than 2µm Ra. The characteristically upper zone 58 are indicative of the same or similar process being in operation as in the above Examples. Forming grooves in semiconductor wafers (such as silicon wafers) is an important process because devices within the semiconductor wafer can later be separated from each other by bending the wafer. Forming grooves in polysilicon material is also important for the manufacture of photovoltaic (solar) cells. It is believed that by increasing the optical power to the range 100W to 200W, very clean grooves would be obtainable at higher cutting speeds.

With reference to the results described in the above Examples, and with refererence to Figure 5, when the cutting process is working properly to produce a smooth upper zone 58, the average roughness achievable was less than 5µm Ra. With optimisation of the process by the above techniques, and in particular Process A discussed in Example 4, the average roughness of the upper zone 58 was reduced to less than 2µm Ra. The average roughness of the lower zone 59 was typically slightly higher, in the range between 2µm and 5µm Ra. When the process is not working properly, the average roughness of the upper zone 58 was approximately 10µm to 15µm Ra, with a scalloped edge (typical of laser machining) being visible, and there was often a raised edge of redeposited or melted material on the upper surface 44. The undesirable scalloping and the undesirable raised edge are typical of conventional laser machining.

The average top and bottom kerf widths 32 and 52 were measured from the wafers processed in the Examples 4 to 7 above. Representative data are presented in Table 1. Surprisingly, the kerf walls 53 and 54 when using the X2 beam expander are substantially parallel, as are the kerf walls for the X3.7 beam expander when processing the 0.68mm thick silicon. Such results are surprising because laser cutting with a 1µm laser would normally have been expected to produce tapered kerf walls. This is further indication of the novelty and utility of the inventive cutting process.

**Table 1 showing effect of beam expansion on kerf width**

| **Thickness mm** | **Beam expansion** | **Av top kerf 32 (µm)** | **Av. Bottom kerf 52 (µm)** |
|---|---|---|---|
| 0.4 | X2 | 50 | 45 |
| 0.68 | X2 | 63 | 62 |
| 0.68 | X1 | 105 | 40 |
| 0.68 | X3.7 | 107 | 80 |
| 1.0 | X1 | 250 | 70 |
| 1.0 | X2 | 53 | 40 |
| 1.0 | X3.7 | 195 | 50 |

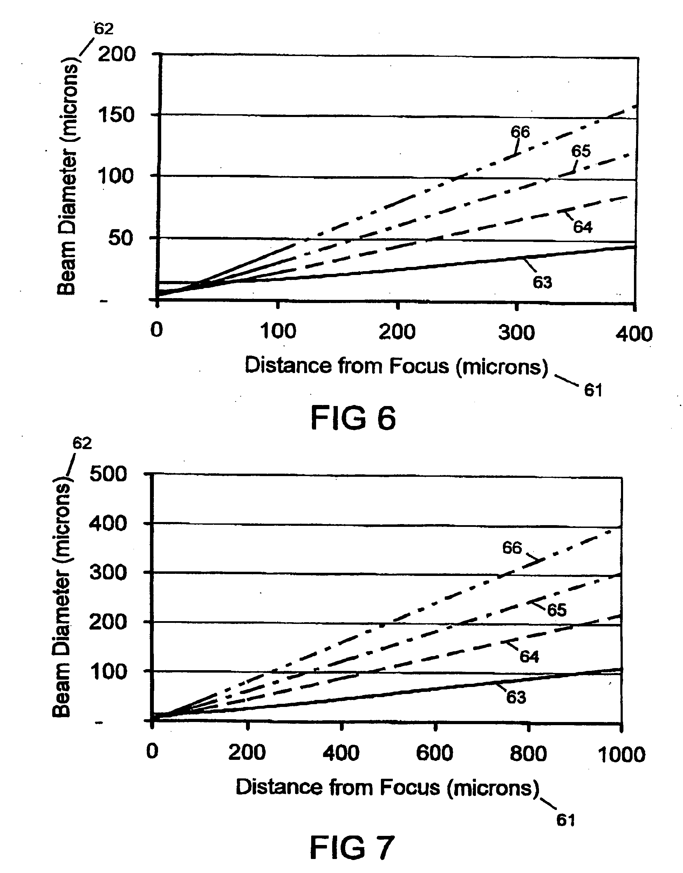

Referring now to Figure 6, there is shown the variation in beam diameter 62 versus the distance 61 from the beam waist 41. These were calculated using Gaussian beam optics with the assumption that M² = 1.1. The larger the input beam diameter of the laser beam 3, the smaller the diameters of the beam waist 41. The four curves 63. 64, 65 and 66 represent the calculated beam diameters for X1, X2, X2.8, and X3.7 respectively. Figure 7 shows the beam diameter 62 over a larger distance 61. These curves are probably the best that could be achieved, and would assume that no degradation in beam quality occurs through the apparatus and process of the present invention.

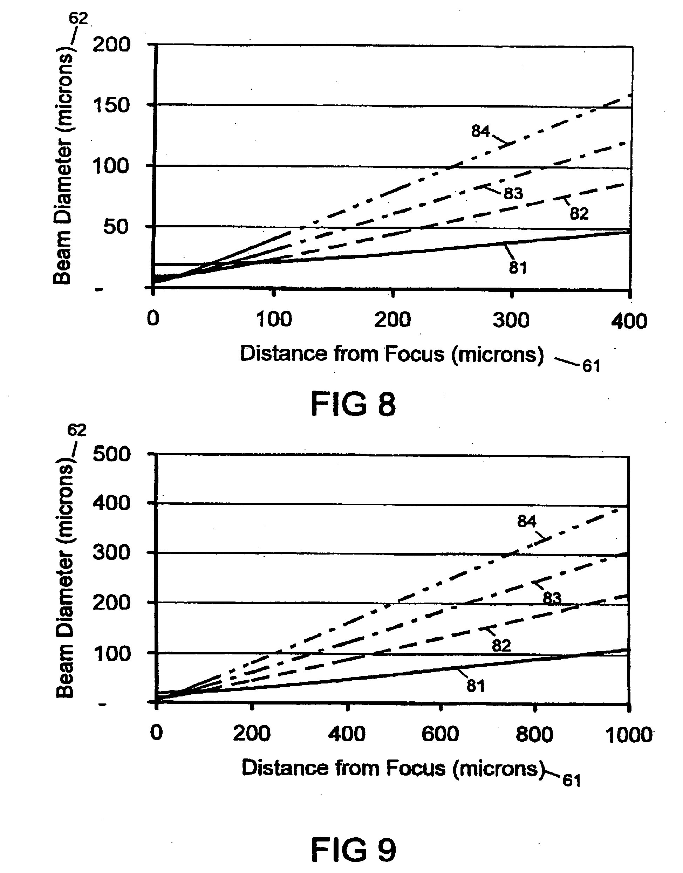

Similar results are shown in Figures 8 and 9 with the curves 81, 82, 83 and 84 representing the beam diameters for X1, X2, X2.8, and X3.7 respectively assuming an M² =1.5. An M² of 1.5 would take into account degradation in beam quality through the apparatus and through the flowing gas 5.

Comparing Figures 6 and 8 with and Figures 7 and 9, it is seen that the degradation in beam quality (as measured by the M² parameter) has negligible effect on the beam diameters away from the focus at the beam waist 41. However, the beam diameters at the focus are larger with M² = 1.5 than with M² =1.1.

An experimental observation was that when using the X3.7 beam expansion to cut the 0.68 mm material, it was necessary to focus approximately 50µm more deeply into the silicon as the cut speed was increased to minimise the formation of dross 57.

The upper zone 58 having the characteristic smooth surface had a depth of approximately 200µm for each thickness of material tested. Thus for the 0.2mm thick silicon wafer, the characteristic smooth surface covers the full depth of the material.

It was also noted that for the 1 mm thick material, it was necessary to focus 0.6 mm deep into the material to perform the initial piercing. To allow cutting at a reasonable speed, it was then necessary to raise the focus position 48 to 0.25mm below the surface. A similar effect was noted when using 150W to cut 0.68 mm thick material. This may indicate that the piercing process may be different from the optimised cutting process and also shows the importance of the focus optimisation method (Process A) referred to above.

The kerf data of Table 1 would indicate that the upper kerf width 32 is approximately 50 to 60µm when using the X2 beam expander. Referring to Figures 6 and 8, this would correspond to a distance 61 from the focus of approximately 150 to 250µm. This lends support to the experimental observation that the best cut quality was obtained when the focal position 48 was between approximately 150 to 250µm into the material 1. Increasing the focal position 48 would have the effect of reducing the intensity at the surface of the material 1. Reducing the focal position 48 would mean that the optical intensity above the surface of the material may be sufficient to allow the plasma jet 9 to propagate out of the confined space of the kerf 31. This would result in a poorly confined plasma jet 9, and an unstable cutting condition. Experimentally this was observed first as sporadic ejecta 25 emission from the kerf 31. Also as an increased kerf width 32 on the top surface 44, and hence less parallel walls 53, 54. The X2 results are clearly the optimal in terms of parallel walls. The X3.7 results show near parallel walls for the 0.68µm material, but non parallel walls for the 1µm material. Experimentally, it was found to be very difficult to set up the apparatus with the X3.7 beam expansion. This is thought to be due to the 25µm increment in focus positioning obtainable from the apparatus. Finer adjustment should allow the apparatus to be set up with the larger beam diameter provided by the X3.7 beam expansion.

Interestingly, the process did not work properly with the X1 beam (ie no beam expander). This is presumably because the optical intensity of the laser beam 3 near the beam waist 41 is insufficient to generate and maintain a stable plasma jet 9 having sufficient energy to pmcess the silicon with the characteristic smooth surface obtainable with high optical intensities. The higher optical intensities were provided by expanding the beam emitted by the collimator 12 using the beam expanders to provide a beam waist 41 having a smaller diameter. Referring to Figures 8 and 9, this would imply that for a 0.4mm thick silicon wafer, the optical intensity required at the beam waist 41 needs to be greater than about 70MW/cm² for the process to work (corresponding to a X2 beam expander, the 50W as observed in Example 6 with the 0.4mm thick silicon, and assuming an M² =1.5). The corresponding diameter of the beam waist 41 is approximately 9.5µm. For thicker wafers, a higher optical intensity is required, greater than approximately 200MW/cm² (corresponding to the X2 beam, 150W as observed in Example 1 with the 0.68mm thick silicon, and assuming an M² =1.5). The corresponding diameter of the beam waist 41 is again approximately 9.5µm. Note that the fibre laser being used had a specified M² of 1.1. However, it is believed that there is some degradation in beam quality through the lens (focussing optics 8) and through the gas 5. If the figure of M² of 1.1 had been used, corresponding to the optical beam parameters prior to processing, the critical optical intensities above would have been about (1.5/1.1)² larger, which is approximately 1.8, times as large, ie 130MW/cm² for the 0.2mm thick silicon, and 390MW/cm² for the 0.68mm thick silicon. The corresponding diameter of the beam waist 41 is approximately 7µm. Preferably the optical intensities should be 10% to 50% times greater than these critical figures for reliable operation in cutting silicon.

The above Figures and Examples indicate that the process of the present invention provides a novel cutting mechanism that gives very high speed cuts (greater than 5m/min) with a characteristically smooth crack free upper surface (upper zone 58) to the kerf 31. By refining the technique, it is possible to minimise the dross 57 adhering to the underneath of the cut, hence minimising cracking. Although a wide range of parameters may be used, an approximately 11mm input beam diameter (provided by the X2 beam expansion , focal length of 50mm, and a gas pressure of approximately 200 psi (1379 KPa) represented the best practical compromise and was found to give the largest processing window.

The process of the present invention affords reliable reproduction in all thicknesses of silicon material up to and beyond 1 mm thick. Higher speed cutting of <0.5 mm thick silicon will be possible with higher speed motion systems. By far the most important processing variable is the of the focus position 48 in the material. This needs to be optimised for each-material thickness, power and speed combination.

The present invention enables the provision of a kerf 31 which is characterised first and foremost by the existence of a super smooth upper edge (the upper zone 58) to the kerf 31 and no scalloping within the upper zone 58. With further optimization, the process is characterised by a narrow and almost parallel kerf 31. The kerf 31 can be cut through the material 1, or can be cut part of the way through the material I to form a groove.

With reference to the Figures 1 to 5, an aspect of the invention can be considered to be a process for cutting a non-metallic material 1, which process comprises the steps of: providing a laser cutting apparatus 19 comprising a laser 2, a gas nozzle 4, and an outlet orifice 6 in the gas nozzle 4; positioning the outlet orifice 6 at a stand-off distance 15 from a surface 7 of the material 1; flowing gas 5 through the outlet orifice 6 to form a gas stream 47; energizing the laser 2 in order to create a laser beam 3; focusing the laser beam 3 through the outlet orifice 6 to form a beam waist 41 at a focus position 48 at or near the surface 7 of the material 1; the process being characterized by: using the laser 2 to strike a plasma jet 9 in the gas stream 47; and using the laser 2 to heat the plasma jet 9 to cause the temperature of the plasma jet 9 to increase sufficiently to cut the material 1 with a kerf 31 that has an upper zone 58 having an average roughness less than 5µm Ra.

At least one of the laser intensity, the pressure of the gas 5 in the gas stream 47, the stand off distance 15, and the focus position 48 may be adjusted to cause the increase in the temperature of the plasma jet 9.

The temperature of the plasma jet 9 may be greater than 2000C. The temperature of the plasma jet 9 may be greater than 5000C.

The focus position 48 may be selected such that the plasma jet 9 is contained substantially below the surface 7 of the material 1. The focus position 48 may be between approximately 100µm and 250µm below the surface 44 of the material 1. The focus position 48 may be between approximately 150µm and 200µm below the surface 7 of the material 1. The focus position 48 may be selected such that the average roughness is less than 2µm Ra. At least one of the focus position 48 and the cutting speed may be adjusted to increase the cohesiveness of the ejecta 25. The cutting speed may be adjusted such that the ejecta 25 emerge at an angle 21 substantially equal to 30 degrees from the normal to the surface 7 of the material 1. The focus position 48 may be selected in order to define the kerf 31 by substantially parallel side walls 53, 54. The focus position 48 may be selected in order to provide a cutting speed of at least 1m/min. The focus position 48 may be selected in order to provide a cutting speed of at least 5m/min. The focus position 48 may be selected in order to provide a cutting speed of at least 8m/min.

The process may include the step of providing a focussing monitoring means 55.

The process may include the step of providing an ejecta monitoring means 56.

The gas 5 may comprise an inert gas. The inert gas may comprise a noble gas. The noble gas may be argon.

The gas pressure within the nozzle 4 may be than 100psi and less than 500psi. The gas pressure may be between approximately 150psi (1034 KPa) and 300psi (2068 KPa).

The outlet orifice 6 may have an exit diameter 46 of between 100µm to 1mm. The exit diameter 46 may be approximately 500µm.

The stand-off distance 15 may be less than 250µm. The stand-off distance 15 may be less than 200µm. The stand-off distance 15 may be between approximately 50µm and 100µm.

The beam waist 41 may have a diameter less than 20µm. The diameter may be less than 10µm. The diameter may be less than 7µm.

The optical intensity at the beam waist 41 may be greater than 70MW/cm². The optical intensity may be greater than 200MW/cm². The optical intensity may be greater than 390MW/cm².

The laser 2 may be defined by an M² between 1 and 4. The M² may be less than 2. The M² may be less than 1.5.

The wavelength of the laser radiation 3 may be in the range 800nm to 2500nm. The range may be between 1030nm and 1150nm. The range may be 1060nm to 1090nm.

The laser 2 may have an average power on the surface of the material greater than 20W. The average power may be greater than 37.5W. The average power may be between 100W and 1kW. The average power may be between 100W and 500W.

The laser 2 is a continuous wave laser.

The laser 2 may be a fibre laser comprising at least one rare-earth dopant (not shown). The rare-earth dopant may comprise Ytterbium.

The material 1 may have a surface flatness in the region to be machined less than the stand-off distance 15. The surface flatness may be less than 10µm.

The material 1 may comprise at least one of a semiconductor, a non-semiconductor crystal, a glass, or a ceramic other than a semicondutor, a non semiconductor crystal and a glass. The semiconductor may be silicon. The ceramic may be alumina. The crystal may be sapphire.

The gas 5 may comprise a reactive gas that can react with the material.

Examples of non-metallic materials that may be processed according to the present invention include semiconductors, ceramics, crystal, or combinations of semiconductors, ceramics and crystals.

The semiconductor can comprise: silicon, germanium; a III-V semiconductor comprising materials such as gallium arsenide, indium phosphide, or indium antimonide; a 11-VI semiconductor comprising materials such as cadmium selenide, cadmium sulfide, or cadmium telluride, a quaternary semiconductor comprising materials such as gallium indium arsenide phosphide; or other semiconductors or alloy semiconductors comprising at least one of silicon, germanium, gallium, indium, phosphide, aluminium, or arsenide. The ceramic preferably comprises alumina. The crystal preferably comprises sapphire.

As indicated above, the invention also extends to a semiconductor device, a solar panel cell, a fuel cell, a printing head, an ornamental item, a piece of jewelry, or a toy when comprising the cut non-metallic material produced by the process of the present invention. The semiconductor device may comprise a silicon chip for example as used in a games console. The semiconductor device may be made from a silicon wafer resized, cut, or diced using one of the above processes. Solar panel cells may comprise polysilicon material processed using the invention. Silicon based fuel cells require careful dicing of silicon for which this invention would be ideally suited. The printing head may be an ink jet printer head comprising silicon or ceramic with small slots cut into it using the invention. Ornamental items may comprise silicon or ceramic materials. Jewelry can be made using silicon or ceramic materials which can comprise coloured and shiny surfaces. Toys can also comprise silicon or ceramic materials which can comprise coloured and shiny surfaces. All of these items can be advantageously manufactured using the process of the invention, together with other processes such as packaging.

## Claims

1. A process for cutting a non-metallic material (1), which process comprises the steps of:
providing a laser cutting apparatus having a laser (2), a gas nozzle (4) and an outlet orifice (6) in the gas nozzle (4);
positioning the outlet orifice (6) at a stand-off distance (15) from a surface (7) of the material (1);
flowing gas (5) through the outlet orifice (6) to form a gas stream (47);
energizing the laser (2) in order to create a laser beam (3);
focusing the laser beam (3) through the outlet orifice (6) to form a beam waist (41) at a focus position (48) at or near the surface (7) of the material (1);
the process being **characterized by**:
the laser (2) is a continuous wave laser;
using the laser (2) to strike a plasma jet (9) in the gas stream (47); and
using the laser (2) to heat the plasma jet (9) to cause the temperature of the plasma jet (9) to increase sufficiently to cut the material (1) with a kerf (31) that has an upper zone (58) having an average roughness less than 5µm Ra.

2. A process according to claim 1 wherein at least one of the intensity of the laser beam (3), the pressure of the gas (5) in the gas stream (47), the stand off distance (15), and the focus position (48) is adjusted to cause the increase in the temperature of the plasma jet (9).

3. A process according to claim 1 or claim 2 wherein the temperature of the plasma jet (9) is greater than 2000C.

4. A process according to any one of the preceding claims wherein the focus position (48) is selected such that the plasma jet (9) is maintained substantially below the surface (7) of the material (1).

5. A process according to any one of the preceding claims wherein the focus position (48) is between approximately 100µm and 250µm below the surface (7) of the material (1).

6. A process according to any one of the preceding claims wherein the focus position (48) is selected such that the average roughness is less than 2µm Ra.

7. A process according to any one of the preceding claims wherein the focus position (48) is selected in order to define the kerf by substantially parallel side walls.

8. A process according to any one of the preceding claims wherein the focus position (48) is selected in order to provide a cutting speed of at least 1m/min.

9. A process according to claim 8 wherein the focus position (48) is selected in order to provide a cutting speed of at least 5m/min.

10. A process according to claim 9 wherein the focus position (48) is selected in order to provide a cutting speed of at least 8m/min.

11. A process according to any one of the preceding claims wherein the gas pressure is greater than 100psi (689 KPa) and less than 500psi (3447 KPa).

12. A process according to any one of the preceding claims wherein the stand-off distance (15) is less than 250µm.

13. A process according to claim 12 wherein the stand-off distance (15) is less than 200µm.

14. A process according to any one of the preceding claims wherein the wavelength of the laser beam (3) is in the range 800nm to 2500nm.

15. A process according to any one of the preceding claims wherein the material (1) comprises at least one of a semiconductor, a crystal, a glass, or a ceramic.

## Patentansprüche

1. Prozess zum Schneiden eines nichtmetallischen Materials (1), wobei der Prozess die folgenden Schritte umfasst:
Bereitstellen einer Laserschneidvorrichtung mit einem Laser (2), einer Gasdüse (4) und einer Auslassöffnung (6) in der Gasdüse (4) ;
Positionieren der Auslassöffnung (6) in einer Abstandsentfernung (15) von einer Oberfläche (7) des Materials (1);
Strömenlassen von Gas (5) durch die Auslassöffnung (6), um einen Gasstrom (47) auszubilden;
Bestromen des Lasers (2), um einen Laserstrahl (3) zu erzeugen;
Fokussieren des Laserstrahls (3) durch die Auslassöffnung (6), um eine Strahltaille (41) an einer Fokusposition (48) an oder nahe der Oberfläche (7) des Materials (1) auszubilden;
wobei der Prozess **gekennzeichnet ist durch**:
der Laser (2) ist ein Dauerstrahllaser;
Verwenden des Lasers (2) zum Zünden eines Plasmastrahls (9) in dem Gasstrom (47) und
Verwenden des Lasers (2) zum Erhitzen des Plasmastrahls (9), um zu bewirken, dass die Temperatur des Plasmastrahls (9) ausreichend ansteigt, um das Material (1) mit einer Kerbe (31) zu schneiden, die eine obere Zone (58) mit einer mittleren Rauheit von unter 5 µm Ra aufweist.

2. Prozess nach Anspruch 1, wobei mindestens die Intensität des Laserstrahls (3), der Druck des Gases (5) in dem Gasstrom (47), Abstandsentfernung (15) und/oder die Fokusposition (48) verstellt werden, um die Zunahme bei der Temperatur des Plasmastrahls (9) zu bewirken.

3. Prozess nach Anspruch 1 oder 2, wobei die Temperatur des Plasmastrahls (9) über 2000°C beträgt.

4. Prozess nach einem der vorhergehenden Ansprüche, wobei die Fokusposition (48) derart gewählt ist, dass der Plasmastrahl (9) im Wesentlichen unter der Oberfläche (7) des Materials (1) gehalten wird.

5. Prozess nach einem der vorhergehenden Ansprüche, wobei die Fokusposition (48) zwischen etwa 100 µm und 250 µm unter der Oberfläche (7) des Materials (1) liegt.

6. Prozess nach einem der vorhergehenden Ansprüche, wobei die Fokusposition (48) derart gewählt ist, dass die mittlere Rauheit unter 2 µm Ra beträgt.

7. Prozess nach einem der vorhergehenden Ansprüche, wobei die Fokusposition (48) derart gewählt ist, dass die Kerbe durch im Wesentlichen parallele Seitenwände definiert wird.

8. Prozess nach einem der vorhergehenden Ansprüche, wobei die Fokusposition (48) so gewählt wird, dass eine Schneidgeschwindigkeit von mindestens 1 m/min bereitgestellt wird.

9. Prozess nach Anspruch 8, wobei die Fokusposition (48) so gewählt wird, dass eine Schneidgeschwindigkeit von mindestens 5 m/min bereitgestellt wird.

10. Prozess nach Anspruch 9, wobei die Fokusposition (48) so gewählt wird, dass eine Schneidgeschwindigkeit von mindestens 8 m/min bereitgestellt wird.

11. Prozess nach einem der vorhergehenden Ansprüche, wobei der Gasdruck über 100 psi (689 kPa) und unter 500 psi (3447 kPa) liegt.

12. Prozess nach einem der vorhergehenden Ansprüche, wobei die Abstandsentfernung (15) unter 250 µm beträgt.

13. Prozess nach Anspruch 12, wobei die Abstandsentfernung (15) unter 200 µm liegt.

14. Prozess nach einem der vorhergehenden Ansprüche, wobei die Wellenlänge des Laserstrahls (3) im Bereich 800 nm bis 2500 nm liegt.

15. Prozess nach einem der vorhergehenden Ansprüche, wobei das Material (1) mindestens einen Halbleiter, einen Kristall, ein Glas und/oder eine Keramik umfasst.

## Revendications

1. Procédé pour découper un matériau non métallique (1), lequel procédé comprend les étapes consistant à :
se procurer un appareil de découpe au laser comportant un laser (2), une buse à gaz (4) et un orifice de sortie (6) dans la buse à gaz (4) ;
positionner l'orifice de sortie (6) à une distance de sécurité (15) d'une surface (7) du matériau (1) ;
faire s'écouler du gaz (5) à travers l'orifice de sortie (6) pour former un courant gazeux (47) ;
alimenter le laser (2) afin de créer un faisceau laser (3) ;
focaliser le faisceau laser (3) à travers l'orifice de sortie (6) pour former un col de faisceau (41) à une position de focalisation (48) sur ou près de la surface (7) du matériau (1) ;
le procédé étant **caractérisé par** :
le laser (2) étant un laser à onde entretenue ;
l'utilisation du laser (2) pour envoyer un jet de plasma (9) dans le courant gazeux (47) ; et
l'utilisation du laser (2) pour chauffer le jet de plasma (9) afin de faire monter suffisamment la température du jet de plasma (9) pour découper le matériau (1) avec une saignée (31) qui comporte une zone supérieure (58) ayant une rugosité moyenne inférieure à 5 µm Ra.

2. Procédé selon la revendication 1, dans lequel au moins un paramètre parmi l'intensité du faisceau laser (3), la pression du gaz (5) dans le courant gazeux (47), la distance de sécurité (15) et la position de focalisation (48) est ajusté pour provoquer la hausse de la température du jet de plasma (9).

3. Procédé selon la revendication 1 ou la revendication 2, dans lequel la température du jet de plasma (9) est supérieure à 2000 °C.

4. Procédé selon l'une quelconque des revendications précédentes, dans lequel la position de focalisation (48) est choisie de telle sorte que le jet de plasma (9) soit maintenu sensiblement en dessous de la surface (7) du matériau (1).

5. Procédé selon l'une quelconque des revendications précédentes, dans lequel la position de focalisation (48) se situe approximativement entre 100 µm et 250 µm en dessous de la surface (7) du matériau (1).

6. Procédé selon l'une quelconque des revendications précédentes, dans lequel la position de focalisation (48) est choisie de telle sorte que la rugosité moyenne soit inférieure à 2 µm Ra.

7. Procédé selon l'une quelconque des revendications précédentes, dans lequel la position de focalisation (48) est choisie afin de définir la saignée par des parois latérales sensiblement parallèles.

8. Procédé selon l'une quelconque des revendications précédentes, dans lequel la position de focalisation (48) est choisie afin d'obtenir une vitesse de découpe d'au moins 1 m/min.

9. Procédé selon la revendication 8, dans lequel la position de focalisation (48) est choisie afin d'obtenir une vitesse de découpe d'au moins 5 m/min.

10. Procédé selon la revendication 9, dans lequel la position de focalisation (48) est choisie afin d'obtenir une vitesse de découpe d'au moins 8 m/min.

11. Procédé selon l'une quelconque des revendications précédentes, dans lequel la pression du gaz est supérieure à 100 psi (689 kPa) et inférieure à 500 psi (3447 kPa).

12. Procédé selon l'une quelconque des revendications précédentes, dans lequel la distance de sécurité (15) est inférieure à 250 µm.

13. Procédé selon la revendication 12, dans lequel la distance de sécurité (15) est inférieure à 200 µm.

14. Procédé selon l'une quelconque des revendications précédentes, dans lequel la longueur d'onde du faisceau laser (3) se situe dans la gamme de 800 nm à 2500 nm.

15. Procédé selon l'une quelconque des revendications précédentes, dans lequel le matériau (1) comprend au moins un élément parmi un semi-conducteur, un cristal, un verre et une céramique.
